# EUROPÄISCHE PATENTSCHRIFT

(11) **EP 0 901 055 B1**
(45) Veröffentlichungstag und Bekanntmachung des Hinweises auf die Patenterteilung: **01.10.2003**
(21) Anmeldenummer: 98112917.4
(22) Anmeldetag: 11.07.1998
(51) Int. Cl.: G05D 1/02, B60K 31/00

(54) **Verfahren und Vorrichtung zur Abstandsregelung für ein Fahrzeug**
Method and apparatus for distance regulation of a vehicle
Méthode et apparatus de commande de distance d'un véhicule

(30) Priorität: 23.08.1997 DE 19736756
(43) Veröffentlichungstag der Anmeldung: 10.03.1999
(73) Patentinhaber: Volkswagen Aktiengesellschaft, 38436 Wolfsburg (DE)
(72) Erfinder: Bastian, Andreas Dr., 38114 Braunschweig (DE)

(56) Entgegenhaltungen:
- EP-A- 0 813 986
- EP-A- 0 813 988
- DE-A- 4 437 678
- US-A- 4 706 195
- US-A- 5 014 200
- US-A- 5 375 060
- PROTZEL P ET AL: "ABSTANDREGELUNG VON FAHRZEUGEN MIT FUZZY CONTROL" FUZZY LOGIC. THEORIE AND PRAXIS. DORDMUNDER FUZZY-TAGE,7. Juni 1993, Seiten 212-221, XP000645972

## Beschreibung

Die Erfindung betrifft ein Verfahren und eine Vorrichtung zur Abstandsregelung für Fahrzeuge

Bei Verfahren zur Abstandsregelung von Kraftfahrzeugen wird der Abstand des eigenen Kraftfahrzeuges zum vorherfahrenden Kraftfahrzeug ohne Eingriff des Fahrers durch eine automatische Steuerung der Fahrgeschwindigkeit eingestellt. Mittels einer Meßeinrichtung wird hierzu unter Verwendung gerichteter elektromagnetischer Wellen (Laser, Radar) aus deren Laufzeit oder Phaseninformation der Abstand zum vorausfahrenden Fahrzeug auf der eigenen Fahrspur bestimmt und diese Abstandsinformation einer Kontroll-/Steuereinheit zugeführt, die die Geschwindigkeit des Kraftfahrzeuges durch einen Eingriff in Gas und/oder Bremse so steuert, daß der Abstand zum vorausfahrenden Kraftfahrzeug einem vorgegebenen Sollabstand entspricht. Bei bekannten Verfahren ist dieser Sollabstand konstant vorgegeben oder entspricht einem definierten geschwindigkeitsabhängigen Sicherheitsabstand. Eine Änderung des Abstandes bei der Abstandsregelung beispielsweise abhängig von der Verkehrssituation bzw. Verkehrsdichte ( bei dichterem Verkehr ist oftmals ein geringer Abstand zum Vordermann wünschenswert, um ein Einscheren anderer Verkehrsteilnehmer vor das eigene Fahrzeug und der hiermit verbundenen Abbremsung zu verhindern) oder abhängig vom persönlichen Fahrstil des Fahrers ("sportliche" Fahrer bevorzugen einen geringeren Abstand zum Vordermann und stehen einer Abstandsregelung skeptisch gegenüber, die diesem Gefühl nicht nachkommt, während Fahrer mit einem "ruhigem" Fahrstil einem anderen Fahrzeug mit größeren Sicherheitsreserven folgen wollen) ist somit nicht möglich. Des weiteren ist ein Verfahren bekannt, bei dem der Fahrer den vorgegebenen Sollabstand durch ein Potentiometer am Armaturenbrett variieren kann. Nachteilig hierbei ist, daß der Fahrer ein weiteres Bedienelement handhaben muß und dadurch bei seiner Fahraufgabe zusätzlich belastet wird.

Aus der DE 44 37 678 A1 ist ein Verfahren bekannt, bei dem der Kraftfahrzeugführer für den geschwindigkeitsabhängigen Sollabstand durch Betätigen von Gas- und/oder Bremspedal ein bestimmter Wunschabstand eingebbar ist. Die Vorgabe des Wunschabstandes bei der Aktivierung der Abstandsregelung erfolgt dadurch, daß der Fahrer vor der Aktivierung der Abstandsregelung seinen individuellen, der momentanen Fahrgeschwindigkeit entsprechenden Wunschabstand durch Betätigen von Gaspedal oder Bremspedal beim Hinterherfahren hinter einem Vordermann einstellt; entspricht der momentane Abstand zum vorausfahrenden Kraftfahrzeug dem Wunschabstand, wird die Abstandsregelung durch die Betätigung eines Schalters oder Bedienhebels aktiviert, beispielsweise durch Betätigen eines Bedienhebels am Lenkrad. Die Vorgabe bzw. Variation des Wunschabstandes bei aktivierter Abstandsregelung erfolgt dadurch, daß der Fahrer durch (leichte) Betätigung des Gaspedals bzw. des Bremspedals seinen Wunschabstand reduzieren bzw. vergrößern kann. Bei aktivierter Abstandsregelung wird der Sollabstand (in Abhängigkeit des vorgegebenen Wunschabstands) als Funktion der momentanen Fahrgeschwindigkeit vorgegeben, die Sollabstände als Funktion der Fahrgeschwindigkeit und des Wunschabstandes können beispielsweise als Kennlinien einer Kennlinienschar ermittelt und in der Kontrolleinheit gespeichert werden. Bei einer Variation der Fahrgeschwindigkeit des Vordermanns (und damit auch der eigenen Geschwindigkeit) wird der Sollabstand unter Zuhilfenahme dieser Kennlinien geschwindigkeitsabhängig angepaßt. Nachteilig an diesem Verfahren ist, daß insbesondere bei Einstellung des gewünschten Abstandes bei der Aktivierung der Kraftfahrzeugführer sich für eine Folgezeit entscheidet, die dann systemabhängig über die abgespeicherten Kennlinien entsprechend der Fahrgeschwindigkeit nachgeführt werden. Dies entspricht aber nicht zwangsläufig dem individuellen Fahrverhalten, so daß der Kraftfahrzeugführer ständig mit Brems- oder Gaspedal korrigieren muß.

Aus der Veröffentlichung "Abstandsregelung von Fahrzeugen mit Fuzzy-Control", Tagungsband der 3. Dortmunder Fuzzy-Tage, Reihe Informatik Aktuell, Springer-Verlag, 7. Juni 1993, Seiten 212-221 ist bekannt, anstelle eines fest vorgegebenen Sollabstandes, ein Abstandsmodell zu bestimmen, das vom Fahrertyp und der Witterung abhängt. Der Fahrertyp soll dabei über eine externe Sensorik ermittelt werden, wobei eine Möglichkeit zur zuverlässigen automatischen Fahrertyperkennung nicht angegeben wird.

Aus der EP 0 813 988 A2 ist der Vorschlag zu entnehmen, bei einer Abstandsregelung statt eines von dem Fahrer vorgebbaren Sollabstandes eine Folgezeit zu verwenden, die derart definiert ist, daß sie die Zeitdauer zum Zurücklegen des Sollabstandes bei der jeweiligen Geschwindigkeit angibt. Eine feste Folgezeit führt somit zu einem Fahrzeuggeschwindigkeitsabhängig veränderbaren Sollabstand. Wie sich gezeigt hat, führt die Verwendung der Folgezeit als Sollwert zu einer angenehmer empfundenen Abstandsregelung als die Verwendung eines festen Sollabstandes. Zur Einstellung der Folgezeit ist ein manuelles Schaltmittel, das mehrstufig oder kontinuierlich verstellbar ist, vorgesehen. Eine Fahrertyperkennung und davon abhängige Regelung ist nicht vorgesehen.

Aus der EP 0 813 986 A2 geht ein Verfahren zur Abstandsregelung hervor, bei dem das Verhalten des Fahrers hinsichtlich des eingehaltenen Abstands zu vorausfahrenden Fahrzeugen erfaßt wird, wobei die ermittelten Wertekombinationen Abstand/Fahrgeschwindigkeit in Klassen eingeteilt werden und nach Art eines Fuzzy-Reglers Zugehörigkeitsfunktionen gebildet werden, welche dann für die spätere Abstandsregelung verwendet werden.

Die US-A-5 375 060 betrifft ein Verfahren zur Abstandsregelung, bei dem die Fahrereingriffe während der Abstandsregelung beobachtet und ausgewertet werden. Hieraus werden Rückschlüsse auf das Reaktionsvermögen des Fahrers gezogen und der Sollabstand infolgedessen automatisch angepaßt. Der Erfindung liegt daher das technische Problem zugrunde, ein Verfahren und eine Vorrichtung zur Abstandsregelung für ein Fahrzeug zu schaffen, die sich selbständig dem individuellen Fahrverhalten anpassen.

Die Lösung des technischen Problems ergibt sich durch die Merkmale der Patentansprüche 1 und 10. Durch die Aufnahme fahrerspezifischer Wertepaare für Fahrgeschwindigkeit und Folgezeit, die in Kennfelder zusammengefaßt werden, erfolgt auch die automatische Abstandsregelung dem fahrerspezifischen Fahrverhalten. Weitere vorteilhafte Ausgestaltungen der Erfindung ergeben sich aus den Unteransprüchen.

Da insbesondere am Anfang der Inbetriebnahme die Anzahl der aufgenommenen Kennfelder noch nicht sehr groß ist, wird bei Eingabe einer Soll-Folgezeit, für die noch kein Kennfeld existiert, einfach die eingestellte Soll-Folgezeit eingehalten.

Zur besseren Adaption an das fahrerspezifische Verhalten können noch weitere Parameter aufgenommen werden, die einen Einfluß auf die Folgezeit haben. Dies kann beispielsweise der Reibwert des Fahruntergrundes sein.

Das Kennfeld kann alphanumerisch mittels Stützpunkten oder Formeln, mittels Fuzzy-Reglern oder durch ein neuronales Netzwerk nachgebildet werden. Insbesondere bei Berücksichtigung vieler Parameter, die formelmäßig schwer in Beziehung gesetzt werden können, bieten Fuzzy-Regler und neuronale Netzwerke bessere Umsetzungsmöglichkeit.

In einer weiteren bevorzugten Ausführungsform werden verschiedene Kennfeldsätze abgelegt, die fahrerindividuell auswählbar sind. Dies berücksichtigt einerseits, daß ein Kraftfahrzeug von mehreren Kraftfahrzeugführern geführt werden kann (z.B. Ehepaaren), und andererseits, daß ein und der selbe Kraftfahrzeugführer je nach Umständen eine andere Fahrweise bevorzugt. Die Auswahl des entsprechenden Kennfeldes kann dabei über die Eingabeeinheit für die Soll-Folgezeit oder über Identifikationsmittel wie codierte Zündschlüssel oder ähnliches erfolgen Des weiteren ist es möglich, daß das System die gegenwärtige Fahrweise des Kraftfahrzeugführers mit den vorhandenen Kennfeldsätzen vergleicht und dann das passende Kennfeld auswählt.

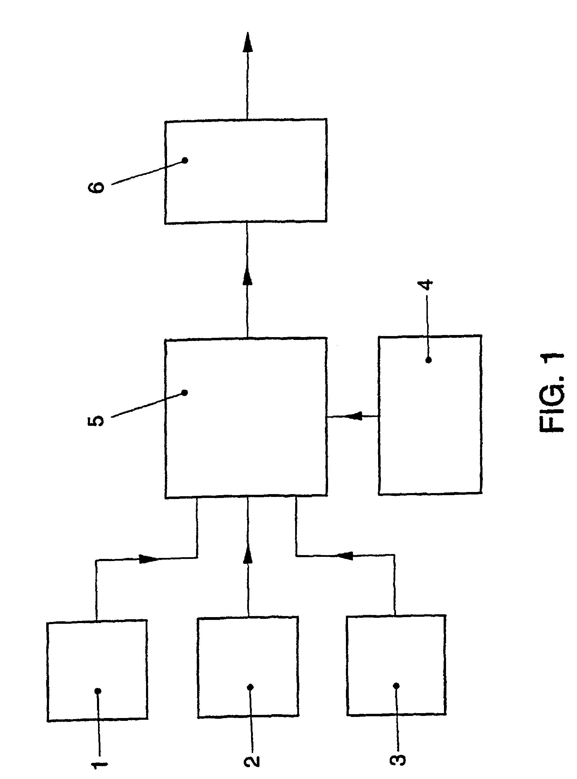

Die Erfindung wird nachfolgend anhand eines bevorzugten Ausführungsbeispiels näher erläutert. Die einzige Figur zeigt ein schematisches Blockschaltbild der Vorrichtung zur Abstandregelung.

Die Vorrichtung umfaßt eine Abstandssensorik 1, eine Fahrgeschwindigkeitssensorik 2, Mittel 3 zur Erfassung oder Ermittlung eines Reibwertes, eine Eingabeeinheit 4, eine Einrichtung 5 zur Ermittlung und Abspeicherung von Kennfeldem und eine Steuerung 6, die auf den Antrieb des Kraftfahrzeugs einwirkt.

Um die Abstandsregelung an die Fahrweise des Kraftfahrzeugführers zu adaptieren, führen bei deaktivierter Abstandsregelung die Abstandssensorik 1, die Fahrgeschwindigkeitssensorik 2 und die Mittel 3 zur Erfassung oder Ermittlung eines Reibwertes der Einrichtung 5 kontinuierlich oder diskret Daten zu, aus denen die Einrichtung 5 ein Kennfeld erstellt. Dieses Kennfeld wird einer mittleren Folgezeit zugeordnet. Beispielsweise wird ein Kennfeld mit einer gemittelten Folgezeit von 1,12 Sekunden eine 1,1 Sekunden Soll-Folgezeit zugeordnet. Die Anzahl aller Kennfelder bildet dann einen Kennfeldsatz, der fahrerspezifisch ist. Aktiviert der Kraftfahrzeugführer über die Eingabeeinheit 4 die Abstandsregelung, so wird dieser aufgefordert eine Soll-Folgezeit einzugeben, die dann von der Einrichtung 5 zur Verfügung gestellt wird. Dieses ausgewählte Kennfeld wird dann von der Steuerung 6, die beispielsweise auf Gas- und Bremspedal einwirkt, befolgt, d.h. die Steuerung 6 verhält sich entsprechend dem gelernten Fahrverhalten des Kraftfahrzeugführers.

## Patentansprüche

1. Verfahren zur Abstandsregelung für ein Fahrzeug, bei dem zumindest in Abhängigkeit der Fahrgeschwindigkeit des Fahrzeuges ein Sollabstand zu einem vorausfahrenden Fahrzeug mittels einer Einrichtung (1, 2, 3, 4, 5 6) zur Berechnung des Sollabstandes ermittelt und eingestellt wird, wobei das Verhalten des Fahrers beobachtet und in die Regelung einbezogen wird, **gekennzeichnet durch** folgende Verfahrensschritte:
a) in ausgewählten Zeitintervallen der deaktivierten Abstandsregelung wird die zur aktuellen Fahrgeschwindigkeit zugehörige Folgezeit zum vorausfahrenden Farhrzeug erfaßt,
b) aus den zugehörigen Wertepaaren Fahrgeschwindigkeit/Folgezeit werden Kennfelder ermittelt und in einer Einrichtung (5) abgespeichert,
c) den ermittelten Kennfeldem wird eine mittlere auftretende Folgezeit zugeordnet,
d) bei Aktivierung der Abstandsregelung über eine Eingabeeinheit (4) wird zur Eingabe einer Soll-Folgezeit aufgefordert und
e) nach Eingabe der Soll-Folgezeit wird ein zugehöriges Kennfeld mit einer mittleren Folgezeit gleich der Soll-Folgezeit aus dem Kennfeldsatz ausgewählt.

2. Verfahren nach Anspruch 1, **dadurch gekennzeichnet, daß** bei Fehlen eines zugehörigen Kennfeldes die Soll-Folgezeit eingehalten wird.

3. Verfahren nach Anspruch 1 oder 2, **dadurch gekennzeichnet, daß** zu den zugehörigen Wertepaaren Fahrgeschwindigkeit und Folgezeit der jeweilige Reibwert ermittelt und zugeordnet wird.

4. Verfahren nach einem der vorangegangenen Ansprüche, **dadurch gekennzeichnet, daß** die Kennfelder als numerische Kennfelder, als Fuzzy-Regler oder als neuronales Netzwerk nachgebildet werden.

5. Verfahren nach einem der vorangegangenen Ansprüche, **dadurch gekennzeichnet, daß** die ermittelten Kennfelder mit Abschaltung der Zündung gelöscht werden.

6. Verfahren nach einem der Ansprüche 1 bis 4, **dadurch gekennzeichnet, daß** die Kennfelder permanent gespeichert werden.

7. Verfahren nach Anspruch 6, **dadurch gekennzeichnet, daß** über eine Eingabeeinheit (4) einzelne Kennfelder wahlweise löschbar sind.

8. Verfahren nach Anspruch 6 oder 7, **dadurch gekennzeichnet, daß** verschiedene Kennfeldsätze abgelegt sind, die fahrerindividuell ausgewählt werden.

9. Verfahren nach Anspruch 8, **dadurch gekennzeichnet, daß** der Kennfeldsatz mittels einer Fahreridentifikation oder durch Vergleich mit dem aktuellen Fahrverhalten ausgewählt wird.

10. Vorrichtung zur Abstandregelung eines Fahrzeuges, umfassend eine Abstandssensorik (1), eine Einrichtung (2) zur Erfassung der Fahrgeschwindigkeit, eine Eingabeeinheit (4) und eine auf den Antrieb des Fahrzeuges einwirkende Steuereinrichtung (6), wobei zumindest in Abhängigkeit der Fahrgeschwindigkeit des Fahrzeuges ein Sollabstand zu einem vorausfahrenden Fahrzeug mittels einer Einrichtung (1, 2, 3, 4, 5 6) zur Berechnung des Sollabstandes ermittelt und eingestellt wird, wobei das Verhalten des Fahrers beobachtet und in die Regelung einbezogen wird, **dadurch gekennzeichnet, daß** die Abstandssensorik (1) und die Einrichtung (2) zur Erfassung der Fahrgeschwindigkeit mit einer Einrichtung (5) zur Ermittlung und Abspeicherung von Kennfeldern derart verbunden sind, wobei deren erstellte Kennfelder mittels der Eingabeeinheit (4) auswählbar und der Steuereinrichtung (6) zuführbar sind,
a) daß in ausgewählten Zeitintervallen der deaktivierten Abstandsregelung die zur aktuellen Fahrgeschwindigkeit zugehörige Folgezeit zum vorausfahrenden Fahrzeug von der Abstandssensorik (1) und der Einrichtung (2) zur Erfassung der Fahrgeschwindigkeit erfaßt werden,
b) daß in der Einrichtung (5) zur Ermittlung und Abspeicherung von Kennfeldern aus den zugehörigen Wertepaaren Fahrgeschwindigkeit/Folgezeit Kennfelder ermittelt und abgespeichert werden,
c) daß den ermittelten Kennfeldern eine mittlere auftretende Folgezeit zugeordnet wird,
d) daß bei Aktivierung der Abstandsregelung über die Eingabeeinheit (4) zur Eingabe einer Soll-Folgezeit aufgefordert wird und
e) daß nach Eingabe der Soll-Folgezeit ein zugehöriges Kennfeld mit einer mittleren Folgezeit gleich der Soll-Folgezeit aus dem Kennfeldsatz ausgewählt wird.

11. Vorrichtung nach Anspruch 10, **dadurch gekennzeichnet, daß** die Einrichtung (5) zur Ermittlung und Abspeicherung von Kennfeldern als Mikroprozessor, Fuzzy-Regler oder als neuronales Netz ausgebildet ist.

12. Vorrichtung nach Anspruch .10 oder 11, **dadurch gekennzeichnet, daß** die Vorrichtung Mittel (3) zur Erfassung oder Ermittlung des Reibwertes umfaßt, die mit der Einrichtung (5) zur Ermittlung und Abspeicherung der Kennfelder verbunden sind.

## Claims

1. Method for distance regulation for a vehicle, in which, at least as a function of the travel speed of the vehicle, a setpoint distance from a vehicle travelling ahead is determined and set by means of a device (1, 2, 3, 4, 5, 6) for calculating the setpoint distance, the behaviour of the driver being observed and included in the regulating process, **characterized by** the following method steps:
a) the follow time from the vehicle travelling ahead for the current travel speed is sensed at selected time intervals of the deactivated distance regulator,
b) characteristic diagrams are determined from the associated travel speed/follow time value pairs and stored in a device (5),
c) an average follow time is assigned to the characteristic diagrams which are determined,
d) a request is made to input a setpoint follow time by means of an input unit (4) when the distance regulator is activated, and
e) after the setpoint follow time has been input, an associated characteristic diagram with an average follow time equal to the setpoint follow time is selected from the set of characteristic diagrams.

2. Method according to Claim 1, **characterized in that** when an associated characteristic diagram is absent, the setpoint follow time is complied with.

3. Method according to Claim 1 or 2, **characterized in that** the respective coefficient of friction for the associated travel speed and follow time value pairs is determined and assigned.

4. Method according to one of the preceding claims, **characterized in that** the characteristic diagrams are simulated as numerical characteristic diagrams, as fuzzy controllers or as a neural network.

5. Method according to one of the preceding claims, **characterized in that** the characteristic diagrams which are determined are deleted when the ignition is switched off.

6. Method according to one of Claims 1 to 4, **characterized in that** the characteristic diagrams are stored permanently.

7. Method according to Claim 6, **characterized in that** individual characteristic diagrams can be optionally deleted by means of an input unit (4).

8. Method according to Claim 6 or 7, **characterized in that** the various sets of characteristic diagrams which are selected on a driver-specific basis are stored.

9. Method according to Claim 8, **characterized in that** the set of characteristic diagrams is selected by means of a driver identification or by comparison with the current driving behaviour.

10. Device for distance regulation of a vehicle, comprising a distance sensor system (1), a device (2) for sensing a travel speed, an input unit (4) and a control device (6) which acts on the drive of the vehicle, in which, at least as a function of the travel speed of the vehicle, a setpoint distance from a vehicle travelling ahead is determined and set by means of a device (1, 2, 3, 4, 5, 6) for calculating the setpoint distance, the behaviour of the driver being observed and included in the regulating process, **characterized in that** the distance sensor system (1) and the device (2) for sensing the travel speed are connected to a device (5) for determining and storing characteristic diagrams - it being possible to select their characteristic diagrams which are generated by means of the input unit (4) and to feed them to the control device (6) - in such a way
a) that the follow time from the vehicle travelling ahead for the current travel speed is sensed at selected time intervals of the deactivated distance regulator, the distance sensor system (1) and the device (2) for sensing the travel speed,
b) that, in the device (5) for determining and storing characteristic diagrams, characteristic diagrams are determined from the associated travel speed/follow time value pairs and stored,
c) that an average follow time is assigned to the characteristic diagrams which are determined,
d) that a request is made to input a setpoint follow time by means of the input unit (4) when the distance regulator is activated, and
e) that after the setpoint follow time has been input, an associated characteristic diagram with an average follow time equal to the setpoint follow time is selected from the set of characteristic diagrams.

11. Device according to Claim 10, **characterized in that** the device (5) for determining and storing characteristic diagrams is embodied as a microprocessor, fuzzy controller or as a neural network.

12. Device according to Claim 10 or 11, **characterized in that** the device comprises means (3) for sensing or determining the coefficient of friction, which means (6) are connected to the device (5) for determining and storing the characteristic diagrams.

## Revendications

1. Méthode de commande de distance d'un véhicule, selon laquelle au moins en fonction de la vitesse de conduite du véhicule une distance de consigne par rapport à un véhicule qui précède est déterminée et mise au point au moyen d'un dispositif (1, 2, 3, 4, 5, 6) calculant la distance de consigne, le comportement du conducteur étant observé et intégré à la commande, **caractérisée par** les opérations suivantes :
a) à des intervalles de temps sélectionnés de la commande de distance désactivée, le temps de suite associé à la vitesse de conduite instantanée par rapport au véhicule qui précède est saisi,
b) à partir des couples de valeur associés que sont vitesse de conduite/temps de suite, des champs caractéristiques sont déterminés et mis en mémoire dans un dispositif (5),
c) on assigne aux champs caractéristiques déterminés un temps de suite moyen,
d) à l'activation de la commande de distance, l'introduction d'un temps de suite de consigne est demandée via une unité d'entrée (4), et
e) après entrée du temps de suite de consigne, un champ caractéristique correspondant incluant un temps de suite moyen égal au temps de suite de consigne en provenance du bloc de champs caractéristiques est sélectionné.

2. Méthode selon la revendication 1, **caractérisée en ce qu'**en l'absence d'un champ caractéristique correspondant, le temps de suite de consigne est observé.

3. Méthode selon la revendication 1 ou 2, **caractérisée en ce que** le coefficient d'adhérence observé est déterminé et assigné aux couples de valeur correspondants que sont la vitesse de conduite et le temps de suite.

4. Méthode selon l'une des revendications précédentes, **caractérisée en ce que** les champs caractéristiques sont reproduits sous forme de champs caractéristiques numériques, régulateurs à logique floue ou réseau neuronal.

5. Méthode selon l'une des revendications précédentes, **caractérisée en ce que** les champs caractéristiques déterminés sont effacés à la coupure de l'allumage.

6. Méthode selon l'une des revendications 1 à 4, **caractérisée en ce que** les champs caractéristiques sont mis en mémoire en continu.

7. Méthode selon la revendication 6, **caractérisée en ce que** des champs caractéristiques sont effaçables optionnellement via une unité d'entrée (4).

8. Méthode selon la revendication 6 ou 7,
**caractérisée en ce que** différents blocs de champs caractéristiques sont consignés, lesquels sont sélectionnés individuellement par le conducteur.

9. Méthode selon la revendication 8, **caractérisée en ce que** le bloc de champs caractéristiques est sélectionné au moyen d'une identification du conducteur ou par comparaison au comportement instantané de conduite.

10. Dispositif de commande de distance d'un véhicule, comprenant un système de capteurs de distance (1), un dispositif (2) détectant la vitesse de conduite, une unité d'entrée (4) et un dispositif de réglage (6) influençant l'entraînement du véhicule, une distance de consigne étant déterminée et mise au point au moins en fonction de la vitesse de conduite du véhicule par rapport à un véhicule qui le précède, au moyen d'un dispositif (1, 2, 3, 4, 5, 6) calculant la distance de consigne, le comportement du conducteur étant observé et intégré à la commande, **caractérisé en ce que** le système de capteurs de distance (1) et le dispositif (2) détectant la vitesse de conduite sont raccordés à un dispositif (5) déterminant et enregistrant des champs caractéristiques, les champs caractéristiques qu'ils élaborent étant sélectionnables au moyen de l'unité d'entrée (4) et adressables au dispositif de réglage (6), de façon telle
a) que dans des intervalles de temps sélectionnés de la commande de distance désactivée, le temps de suite associé à la vitesse de conduite instantanée par rapport au véhicule qui précède est saisi par le système de capteurs de distance (1) et le dispositif (2) détectant la vitesse de conduite,
b) que dans le dispositif (5) détectant et enregistrant les champs caractéristiques, des champs caractéristiques sont déterminés et mis en mémoire à partir des couples de valeur associés que sont vitesse de conduite/temps de suite,
c) qu'on assigne aux champs caractéristiques déterminés un temps de suite moyen,
d) qu'à l'activation de la commande de distance, l'introduction d'un temps de suite de consigne est demandée via l'unité d'entrée (4), et
e) qu'après entrée du temps de suite de consigne, un champ caractéristique correspondant incluant un temps de suite moyen égal au temps de suite de consigne en provenance du bloc de champs caractéristiques est sélectionné.

11. Dispositif selon la revendication 10, **caractérisé en ce que** le dispositif (5) déterminant et enregistrant les champs caractéristiques adopte la forme de microprocesseur, régulateur à logique floue ou réseau neuronal.

12. Dispositif selon la revendication 10 ou 11, **caractérisé en ce que** le dispositif comprend des moyens (3) servant à détecter ou déterminer le coefficient d'adhérence qui sont raccordés au dispositif (5) déterminant et enregistrant les champs caractéristiques.
